# EUROPÄISCHE PATENTSCHRIFT

(11) **EP 3 617 108 B1**
(45) Veröffentlichungstag und Bekanntmachung des Hinweises auf die Patenterteilung: **30.11.2022**
(21) Anmeldenummer: 19191732.7
(22) Anmeldetag: 14.08.2019
(51) Int. Cl.: B65H 54/26, B65H 63/00, D01H 1/32, D01H 4/42

(54) **TEXTILMASCHINE UND VERFAHREN ZUM STEUERN EINER TEXTILMASCHINE**
TEXTILE MACHINE AND METHOD FOR CONTROLLING A TEXTILE MACHINE
MACHINE TEXTILE ET PROCÉDÉ DE COMMANDE D'UNE MACHINE TEXTILE

(30) Priorität: 31.08.2018 DE 102018121316
(43) Veröffentlichungstag der Anmeldung: 04.03.2020
(73) Patentinhaber: Maschinenfabrik Rieter AG, 8406 Winterthur (CH)
(72) Erfinder: MALECK, Mario, 85137 Walting (DE); WEIN, Robin, 85077 Manching (DE)
(74) Vertreter: Canzler & Bergmeier Patentanwälte Partnerschaft mbB

(56) Entgegenhaltungen:
- DE-A1- 10 142 976
- DE-A1- 10 212 712
- DE-A1- 19 547 068
- DE-B4- 10 153 457

## Beschreibung

Die vorliegende Erfindung betrifft eine Textilmaschine, insbesondere Spinn- oder Spulmaschine, mit einer Vielzahl von nebeneinander angeordneten, zu mehreren Sektionen zusammengefassten Arbeitsstellen, welche mehrere kommunikationsfähige Einheiten aufweisen. Die Sektionen weisen jeweils eine Sektionssteuerung auf und zur Kommunikation mit der Sektionssteuerung sind die kommunikationsfähigen Einheiten der Arbeitsstellen einer Sektion mit einem Sektionsbus verbunden. Weiterhin betrifft die Erfindung ein Verfahren zum Steuern einer solchen Textilmaschine, insbesondere Spinn- oder Spulmaschine, mit einer Vielzahl von nebeneinander angeordneten, zu mehreren Sektionen zusammengefassten Arbeitsstellen.

Textilmaschinen und Verfahren zum Steuern von Textilmaschinen sind im Stand der Technik in verschiedenen Ausführungen bekannt geworden. Beispielsweise zeigt die DE 102 12 712 A1 eine Textilmaschine, bei welcher jeder der Spinnstellen eine Elektronikeinheit sowie ein Garnreiniger zugeordnet ist, die als kommunikationsfähige Einheiten ausgebildet sind. Die Elektronikeinheiten sind dabei mit einem ersten Sektionsbus verbunden und die Garnreiniger mit einem Reinigerbus. Stellt der Garnreiniger eine unzulässige Garnqualität fest, so kann er über den Reinigerbus, eine Reinigersektionseinheit, den Sektionsbus und ggf. die Sektionssteuerung einen Reinigerschnitt auslösen. Diese Struktur soll eine kostengünstige Garnüberwachung der Bearbeitungsstellen einer Textilmaschine ermöglichen.

Weiterhin beschreibt die DE 101 53 457 B4 eine solche Textilmaschine, bei welcher die Sektionen jeweils eine Sektionssteuerung aufweisen. Jede der einzelnen Arbeitsstellen weist dabei wenigstens ein Stellelement und wenigstens einen Sensor auf, welche jeweils direkt an den Sektionsbus, mit welchem auch die Sektionssteuerung verbunden ist, angeschlossen sind. Die Sektionssteuerungen sind ihrerseits wiederum an einen gemeinsamen Maschinenbus angeschlossen, welcher mit einer Maschinensteuerung verbunden ist. Dieses Konzept stößt jedoch bei modernen Textilmaschinen mit vielen Arbeitsstellen an Grenzen, da die Anzahl der maximalen Busteilnehmer begrenzt ist. Beispielsweise sind häufig nur 64 oder bis zu 128 Teilnehmer pro Bus möglich, die Arbeitsstellen moderner Maschinen weisen jedoch jeweils mehrere kommunikationsfähige Funktionseinheiten auf. Bei 20 Arbeitsstellen je Sektion ist daher die maximale Anzahl an Busteilnehmern schnell erreicht. Weiterhin kann es durch viele Busteilnehmer und entsprechend lange Busleitungen zu einem Informationsstau auf der Busleitung kommen, so dass wichtige Steuersignale oder Sensorsignale nicht mehr oder nur sehr verzögert übertragen werden. Insbesondere beim Abstellen, beim Wiederanfahren oder beim Ansetzen an den Arbeitsstellen kann dies zu erheblichen Problemen führen.

Die EP 2 028 298 B1 schlägt daher ein anderes Konzept vor, um die Anzahl der Busteilnehmer insbesondere an einem Sektionsbus zu reduzieren. Dabei werden die Arbeitsstellen einer Sektion in Gruppen zusammengefasst und jeder Gruppe wird eine gemeinsame Gruppensteuerung zugeordnet. Die einzelnen Arbeitsstellen jeder Gruppe sind somit nicht direkt, sondern nur über die jeweilige Gruppensteuerung mit dem Sektionsbus verbunden, mit welchem wiederum die jeweilige Sektionssteuerung verbunden ist. Insbesondere bei modernen Textilmaschinen mit sogenannten autarken Arbeitsstellen, bei welchen jede einzelne Arbeitsstelle eine Vielzahl von Einzelantrieben und weiteren Einheiten aufweist, die entsprechend angesteuert werden müssen, stößt jedoch auch dieses Konzept an Grenzen, da jede Gruppensteuerung eine Vielzahl von Einheiten steuern, verwalten und ggf. mit Energie versorgen muss.

Aufgabe der vorliegenden Erfindung ist es daher, eine Textilmaschine und ein Verfahren zum Steuern einer Textilmaschine vorzuschlagen, welche auch bei vielen Arbeitsstellen und vielen kommunikationsfähigen Einheiten eine zuverlässige und schnelle Kommunikation ermöglichen.

Die Aufgabe wird gelöst mit den Merkmalen der unabhängigen Ansprüche.

Eine Textilmaschine, insbesondere eine Spinn- oder Spulmaschine, weist eine Vielzahl von nebeneinander angeordneten, zu mehreren Sektionen zusammengefassten Arbeitsstellen auf, welche jeweils mehrere kommunikationsfähige Einheiten aufweisen. Die Sektionen weisen jeweils eine Sektionssteuerung auf. Zur Kommunikation mit der Sektionssteuerung sind die kommunikationsfähigen Einheiten der Arbeitsstellen einer Sektion mit einem Sektionsbus verbunden.

Es ist nun vorgesehen, dass die Sektionen jeweils wenigstens zwei mit der Sektionssteuerung verbundene Sektionsbusse aufweisen, wobei ein erster Teil der kommunikationsfähigen Einheiten der Arbeitsstellen mit einem ersten der wenigstens zwei Sektionsbusse verbunden ist und ein zweiter Teil der kommunikationsfähigen Einheiten der Arbeitsstellen mit einem zweiten der wenigstens zwei Sektionsbusse verbunden ist.

Bei einem entsprechenden Verfahren zum Steuern einer solchen Textilmaschine wird vorgeschlagen, dass die Sektionen jeweils wenigstens zwei mit der Sektionssteuerung verbundene Sektionsbusse aufweisen, wobei ein erster Teil der kommunikationsfähigen Einheiten der Arbeitsstellen über einen ersten der wenigstens zwei Sektionsbusse mit der Sektionssteuerung und/oder weiteren kommunikationsfähigen Einheiten der Arbeitsstellen kommuniziert und wobei ein zweiter Teil der kommunikationsfähigen Einheiten der Arbeitsstellen über einen zweiten der wenigstens zwei Sektionsbusse mit der Sektionssteuerung und/oder weiteren kommunikationsfähigen Einheiten der Arbeitsstellen kommuniziert.

Unter "Kommunikation" bzw. "kommunizieren" wird dabei im Rahmen der vorliegenden Erfindung der Austausch von Informationen verstanden, welche der Steuerung und/oder der Überwachung der Produktion der Textilmaschine dienen. Insbesondere umfasst die Kommunikation somit die Übermittlung von Steuer- und/oder Sensorsignalen und/oder Betriebsparametern und/oder externen Eingaben.

Sind nun jeweils wenigstens zwei Busse auf der Sektionsebene vorgesehen, so können die einzelnen Funktionseinheiten der einzelnen Arbeitsstellen jeweils auf die beiden Sektionsbusse verteilt werden und dennoch über die gemeinsame Sektionssteuerung angesteuert werden. Dabei ist es insbesondere von Vorteil, dass die einzelnen Funktionseinheiten der Arbeitsstellen über die gemeinsame Sektionssteuerung nicht nur mit der Sektionssteuerung, sondern auch miteinander kommunizieren können. Da dabei die Anzahl der Busteilnehmer auf dem Sektionsbus überschaubar bleibt, kann dennoch eine schnelle Kommunikation erzielt werden. Auch sind hierdurch weniger Verzweigungen erforderlich, welche ansonsten zu Signalreflexionen und Problemen beim Busabschluss führen können. Weiterhin ist es hierdurch auch möglich, die vielen zur Anwendung der einzelnen Funktionseinheiten erforderlichen Verkabelungen und Steckverbindungen in räumlich optimierter Weise auf einem vergleichsweise geringen Platz unterzubringen. Hierdurch können wiederum die erforderlichen Leitungslängen optimiert werden, was wiederum die Geschwindigkeit der Informationsübertragung erhöht.

Bei dem Verfahren zum Steuern einer Textilmaschine ist es weiterhin vorteilhaft, wenn die wenigstens zwei Sektionsbusse mit unterschiedlichen Übertragungsprotokollen und/oder unterschiedlichen Kommunikationsgeschwindigkeiten betrieben werden. Hierdurch ist es u.a. möglich, moderne Komponenten, welche mit einem Highspeed-Protokoll arbeiten können, an einen ersten Bus anzuschließen und dennoch ältere Komponenten, welche einem herkömmlichen Protokoll folgen, an den zweiten Bus anzuschließen und unverändert weiter zu verwenden. Ebenso können beispielsweise Komponenten, welche nicht mit anderen Komponenten kommunizieren sollen, gesondert an einen separaten Bus angeschlossen werden, um einen unerwünschten Informationsaustausch zu verhindern.

Bei der erfindungsgemäße Textilmaschine wird weiterhin vorgesehen, dass der erste Teil der kommunikationsfähigen Einheiten, welcher mit dem ersten Sektionsbus verbunden ist, mehrere gleichartige Einzelantriebe der Arbeitsstellen umfasst. Beispielsweise können im Falle einer Rotorspinnmaschine die Rotoreinzelantriebe direkt als Busteilnehmer an den ersten Sektionsbus angeschlossen sein. Zusätzlich können jedoch auch andere kommunikationsfähige Funktionseinheiten wie mehrere Sensoren, insbesondere mehrere gleichartige Garnreiniger, der Arbeitsstellen der Textilmaschine direkt als Busteilnehmer an den ersten Sektionsbus angeschlossen sein. Ist die Textilmaschine als Luftspinnmaschine ausgebildet, so könnte beispielsweise auch die Luftspinndüse direkt als Busteilnehmer an den ersten Sektionsbus angeschlossen sein. Bei den genannten Funktionseinheiten der Textilmaschine handelt es sich um Einheiten, bei welchen ein schnelles Ansprechen besonders wichtig ist, um die Arbeitsstelle oder die Textilmaschine herunterzufahren, anzufahren oder einen Faden einzusetzen. Durch die Anbindung dieser Einheiten als direkte Busteilnehmer an den ersten Sektionsbus kann dieses schnelle Ansprechen sichergestellt werden.

Weiterhin wird erfindungsgemäß vorgesehen, dass der zweite Teil der kommunikationsfähigen Einheiten Arbeitsstellensteuerungen umfasst, wobei jeweils mehrere Funktionseinheiten der Arbeitsstellen mit den Arbeitsstellensteuerungen verbunden sind. Insbesondere sind hierbei Funktionseinheiten der Arbeitsstellen zu nennen, welche aufeinander abgestimmt durch eine Arbeitsstellensteuerung gesteuert werden können, so dass deren direkte Anbindung an einen der Sektionsbusse nicht erforderlich ist. Da diese Funktionseinheiten nicht direkt, sondern über die Arbeitsstellensteuerungen an den zweiten Sektionsbus angeschlossen sind, kann die Anzahl der Busteilnehmer auf diesem Bus wiederum in vorteilhafter Weise geringgehalten werden.

Weiterhin ist es vorteilhaft, wenn wenigstens zwei verschiedenartige Arbeitsstellensteuerungen vorgesehen sind. Hierdurch können thematisch und/oder funktionell zusammenhängende Funktionseinheiten der Arbeitsstellen jeweils gemeinsam durch eine Arbeitsstellensteuerung angesteuert werden bzw. über diese Informationen erhalten oder an diese Informationen senden. Beispielsweise können bei einer Spinnmaschine Funktionseinheiten, welche mit der Fasermaterialzufuhr in Zusammenhang stehen, mit einer ersten Arbeitsstellensteuerung verbunden sein und weitere Funktionseinheiten, welche mit dem Abzug des fertigen Fadens in Zusammenhang stehen, mit einer zweiten Arbeitsstellensteuerung verbunden sein. Zudem kann hierdurch die Anzahl der Komponenten auf einer Leiterplatte und die Anzahl der notwendigen Verbindungselemente reduziert werden, wodurch Kosten reduziert werden können. Dabei wird dennoch eine höhere Flexibilität bzgl. der räumlichen Anordnung der einzelnen Komponenten erhalten, so dass sich mehr Komponenten platzoptimiert auf vergleichsweise geringem Bauraum unterbringen lassen. Auch Störungen und Fehlfunktionen bei der Signalübertragung können dadurch reduziert werden.

Ebenso ist es vorteilhaft, wenn die verschiedenartigen Arbeitsstellensteuerungen erste Arbeitsstellensteuerungen beinhalten, welche jeweils ein Leistungsteil für die Energieversorgung der Funktionseinheiten der Arbeitsstellen aufweisen, und zweite Arbeitsstellensteuerungen beinhalten, welche jeweils einen Speicher für eine Ablaufsteuerung aufweisen. Gesonderte Leistungsteile an den einzelnen Funktionseinheiten sind hierdurch nicht erforderlich.

Bei dem Verfahren zum Steuern der Textilmaschine ist es demzufolge ebenfalls vorteilhaft, wenn die kommunikationsfähigen Einheiten der Arbeitsstellen wenigstens zwei verschiedenartige Arbeitsstellensteuerungen umfassen, wobei erste Arbeitsstellensteuerungen Funktionseinheiten der Arbeitsstellen mit Energie versorgen und wobei zweite Arbeitsstellensteuerungen zeitliche Abläufe an den Arbeitsstellen steuern.

Ebenso ist es bei dem Verfahren vorteilhaft, wenn die ersten und die zweiten Arbeitsstellensteuerungen über einen der wenigstens zwei Sektionsbusse direkt miteinander kommunizieren. Durch die zweiten Arbeitsstellensteuerungen, welche die Ablaufsteuerung beinhalten, kann über den zweiten Sektionsbus und die ersten Arbeitsstellensteuerungen ein schnelles Ansprechen der einzelnen Funktionseinheiten gewährleistet werden, da die ersten und die zweiten Arbeitsstellensteuerungen über den zweiten Sektionsbus direkt miteinander kommunizieren können.

Um weiterhin eine Kommunikation zwischen den an unterschiedliche Busse angeschlossenen Busteilnehmern zu ermöglichen, ist es bei dem Verfahren zudem vorteilhaft, wenn die Sektionssteuerung als Bridge zwischen dem ersten Teil der kommunikationsfähigen Einheiten der Arbeitsstellen und dem zweiten Teil der kommunikationsfähigen Einheiten der Arbeitsstellen fungiert.

Nach einer Weiterbildung der Erfindung ist es zudem vorteilhaft, wenn die ersten Arbeitsstellensteuerungen als Gruppensteuerungen für eine Gruppe von mehreren, insbesondere vier, Arbeitsstellen ausgebildet sind. Die Anzahl der Busteilnehmer auf dem zweiten Sektionsbus können hierdurch reduziert werden, was wiederum eine schnellere Informationsübermittlung gewährleistet. Weiterhin kann der Verkabelungsaufwand hierdurch reduziert werden und die Länge und Anzahl der Leitungen, welche auch einen Kostenaufwand verursachen, minimiert werden. Ebenso ist es hierdurch möglich, die Anzahl der erforderlichen Steckverbindungen zu reduzieren, so dass diese auf einem vergleichsweise geringen Platz untergebracht werden können. Weiterhin ist hierdurch in vorteilhafter Weise nur ein Netzteil für die Energieversorgung und, sofern vorhanden, nur ein Prozessor für mehrere Arbeitsstellen erforderlich. Auch hierdurch können die Kosten der Kommunikationsstruktur insgesamt reduziert werden.

Daneben ist es auch vorteilhaft, wenn zumindest ein Teil der Funktionseinheiten der Arbeitsstellen jeweils mindestens einen Einzelantrieb aufweist. Die Funktionseinheiten bzw. deren Einzelantriebe können dabei, wie bereits am Beispiel des Rotoreinzelantriebs beschrieben, direkt als Busteilnehmer an einen der Sektionsbusse angeschlossen sein oder aber indirekt über eine Arbeitsstellensteuerung an einen der Sektionsbusse angeschlossen sein. In jedem Fall ist dabei mittels der beschriebenen Kommunikationsstruktur mit zwei Sektionsbussen auch bei einer Maschine mit einer Vielzahl von Einzelantrieben, wie sie bei autarken Arbeitsstellen benötigt werden, eine schnelle und zuverlässige Kommunikation gewährleistet.

Vorteilhaft ist es dabei, wenn jede der Arbeitsstellen als Funktionseinheiten zumindest jeweils einen Zuführantrieb, einen Abzugsantrieb, einen Spulantrieb und einen Changierantrieb aufweist. Ist die Textilmaschine als Rotorspinnmaschine ausgebildet, so ist der Zuführantrieb der Antrieb einer Speisewalze. Ist hingegen die Textilmaschine als Spulmaschine ausgebildet, so wäre der Zuführantrieb der Antrieb einer Ablaufspule und bei einer anderen Spinnmaschine wie einer Ring- oder Luftspinnmaschine wäre der Zuführantrieb beispielsweise ein Streckwerk.

Natürlich können aber sowohl bei Spinnmaschinen wie auch bei Spulmaschinen noch weitere Funktionseinheiten an den Arbeitsstellen vorgesehen sein. Hier sind beispielsweise ein Garnreiniger mit einem Antrieb des Garnreinigers zu nennen, sofern dieser einen bewegbaren Messkopf aufweist, eine Paraffiniereinrichtung mit einem Paraffinierantrieb oder im Falle einer Rotorspinnmaschine eine Auflöseeinrichtung mit einem Auflöseantrieb. Weiterhin kann an einer Spinnstelle eine Öffnereinheit für die Spinneinheit mit einem Öffnerantrieb vorgesehen sein. Auch der bereits genannte Rotor mit dem Rotoreinzelantrieb bildet natürlich eine Funktionseinheit der Arbeitsstelle, auch wenn diese an einem anderen Sektionsbus angeschlossen ist.

Dabei ist es vorteilhaft, wenn zumindest der Zuführantrieb jeder Arbeitsstelle an jeweils eine der ersten Arbeitsstellensteuerungen angeschlossen ist.

Ebenso ist es vorteilhaft, wenn zumindest der Abzugsantrieb, der Spulantrieb und der Changierantrieb jeder Arbeitsstelle an jeweils eine der zweiten Arbeitsstellensteuerungen angeschlossen sind.

Nach einer anderen Weiterbildung ist es vorteilhaft, wenn den Arbeitsstellen eine Anzeigevorrichtung zugeordnet ist. Vorzugsweise ist dabei zumindest den zweiten Arbeitsstellensteuerungen eine Anzeigevorrichtung zugeordnet. Mittels dieser können Informationen über die einzelnen Arbeitsstellen für Bediener angezeigt werden. Dabei ist es vorteilhaft, wenn jeweils zwei Arbeitsstellen, insbesondere zwei zweiten Arbeitsstellensteuerungen eine gemeinsame Anzeigevorrichtung zugeordnet ist. Der Kosten- und Verkabelungsaufwand kann hierdurch weiter reduziert werden.

Gemäß einer weiteren vorteilhaften Weiterbildung ist je Sektion jeweils wenigstens eine Energieversorgungseinheit vorgesehen, welche als Busteilnehmer an den ersten und/oder an den zweiten Sektionsbus angeschlossen ist. Die Energieversorgungseinheit kann hierdurch beispielsweise über die Maschinensteuerung oder über die Sektionssteuerung angesprochen werden und lastfrei geschaltet werden. Ebenso ist es hierdurch möglich, Daten über den Stromverbrauch oder Leistungsdaten der Energieversorgungseinheit wie beispielsweise eine Leistung pro Kilogramm Garn über den Sektionsbus auszulesen. Hierdurch können beispielsweise Verschleißzustände von Baugruppen erkannt werden und die Produktion optimiert werden.

Bei der Textilmaschine ist es weiterhin vorteilhaft, wenn die Textilmaschine eine Maschinensteuerung und einen Maschinenbus aufweist und die Sektionssteuerungen zur Kommunikation mit der Maschinensteuerung an den Maschinenbus angeschlossen sind. Über die Maschinensteuerung, welche in der Regel auch über eine Eingabevorrichtung für einen Bediener verfügt, können dabei die einzelnen Produkte betreffende Informationen und Daten an die Sektionssteuerungen weitergegeben werden. Die Sektionssteuerungen können dabei lediglich der Weitergabe der von der Maschinensteuerung kommenden Daten an die einzelnen Busteilnehmer und umgekehrt dienen. Die Verarbeitung der Daten in Steuerdaten kann in diesem Fall durch die ersten und/oder die zweiten Arbeitsstellensteuerungen erfolgen. Ebenso ist es jedoch auch möglich, dass die Sektionssteuerungen die jeweils bei Ihnen ankommenden Daten verarbeiten und daraus Steuerdaten für die einzelnen Busteilnehmer generieren.

Weitere Vorteile der Erfindung werden anhand der nachfolgend dargestellten Ausführungsbeispiele beschrieben. Es zeigen:
- **Figur 1**: eine Textilmaschine in einer schematischen Vorderansicht als Übersichtsdarstellung,
- **Figur 2**: eine schematische, geschnittene Seitenansicht einer Arbeitsstelle einer Textilmaschine,
- **Figur 3**: ein Blockschaltbild einer Kommunikations- und Steuerstruktur einer Textilmaschine, sowie
- **Figur 4**: eine schematische Darstellung einer Sektion mit einer Kommunikations- und Steuerstruktur.

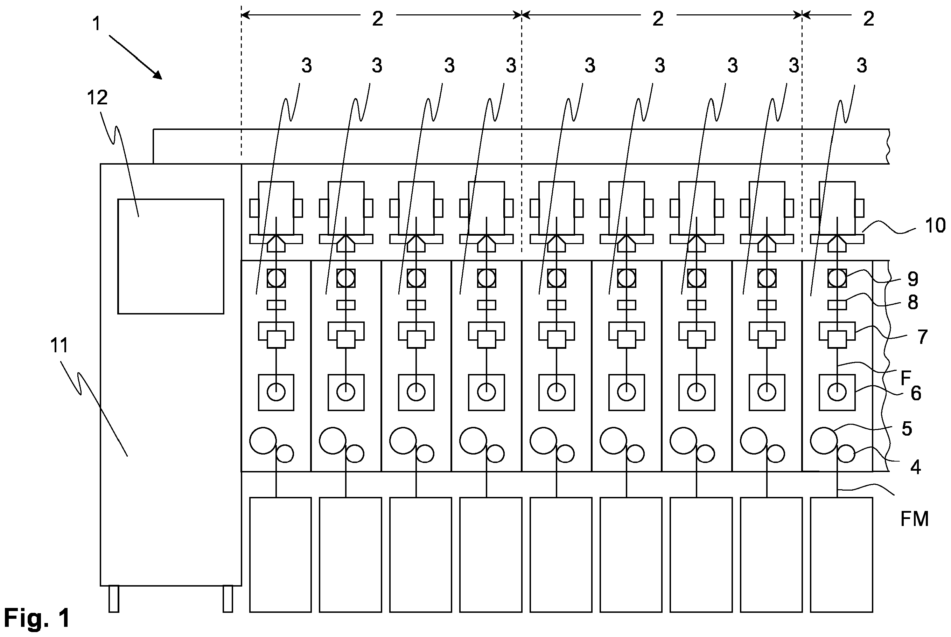

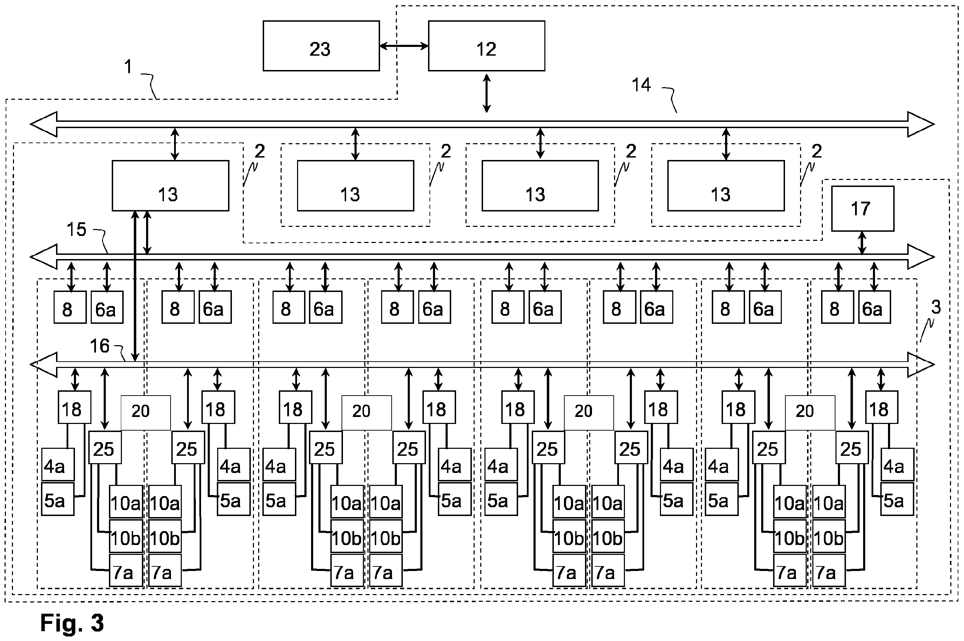

Figur 1 zeigt eine schematische Vorderansicht einer Textilmaschine 1 mit einer Vielzahl von nebeneinander angeordneten, gleichartigen Arbeitsstellen 3. Mehrere Arbeitsstellen 3 sind dabei jeweils zu einer Sektion 2 zusammengefasst, um den Aufbau und die Steuerung der Textilmaschine 1 zu erleichtern. Sichtbar ist dabei lediglich eine Längsseite der Textilmaschine 1. In der Regel weisen jedoch Textilmaschinen 1 jeweils zwei einander gegenüberliegende Längsseiten auf, welche jeweils dieselbe Anzahl an Arbeitsstellen 3 beinhalten. Eine Sektion 2 besteht somit vorliegend aus jeweils acht Arbeitsstellen 3, nämlich den vorliegend sichtbaren vier Arbeitsstellen 3 sowie den vorliegend nicht sichtbaren vier Arbeitsstellen 3 der anderen Längsseite der Textilmaschine 1. In der Realität weist eine Sektion 2 natürlich wesentlich mehr Arbeitsstellen 3 auf, üblich sind beispielsweise 20 Arbeitsstellen 3 je Sektion 2. Weiterhin sind lediglich zwei Sektionen 2 vollständig dargestellt, während eine dritte Sektion 2 abgebrochen dargestellt ist. An einem Ende weist die Textilmaschine 1 ein Endgestell 11 auf, in welchem im vorliegenden Beispiel eine Maschinensteuerung 12 angeordnet ist. Die Maschinensteuerung 12 verfügt vorzugsweise über eine Eingabevorrichtung und ist der gesamten Kommunikationsstruktur der Textilmaschine 1, wie sie im Folgenden noch beschrieben wird, übergeordnet. Gegebenenfalls kann die Maschinensteuerung 12 auch noch mit einer weiter übergeordneten Anlagensteuerung 23 (siehe Figur 3) verbunden sein. Auch an einem anderen, hier nicht sichtbaren Ende der Textilmaschine 1 kann ein weiteres Endgestell 11 vorgesehen sein.

An einer Arbeitsstelle 3 der dritten, unvollständig dargestellten Sektion 2 sind nun beispielhaft die einzelnen Funktionseinheiten der Arbeitsstelle 3 gekennzeichnet. Vorliegend wird dies am Beispiel einer Rotorspinnmaschine ausgeführt. Zur Ausführung der einzelnen Funktionseinheiten der Arbeitsstellen 3 im Falle einer Luftspinnmaschine, einer Ringspinnmaschine oder einer Spulmaschine wird auf die vorangegangene Beschreibung verwiesen. Die einzelnen Arbeitsstellen 3 weisen jeweils eine Zuführvorrichtung 4 auf, mittels welcher der Arbeitsstelle 3 ein Fasermaterial FM zugeführt werden kann. Über eine Auflöseeinrichtung 5, in welcher das Fasermaterial FM in Einzelfasern aufgelöst wird, gelangt das Fasermaterial FM im Anschluss in die Spinnvorrichtung 6, wo es zu einem Faden F versponnen wird. Der Faden F wird mittels einer Abzugsvorrichtung 7 abgezogen und im vorliegenden Beispiel über einen Garnreiniger 8 und eine Paraffiniereinrichtung 9 geführt. Von dort wird der Faden F schließlich der Spulvorrichtung 10 zugeführt, wo er auf eine Kreuzspule aufgewickelt wird.

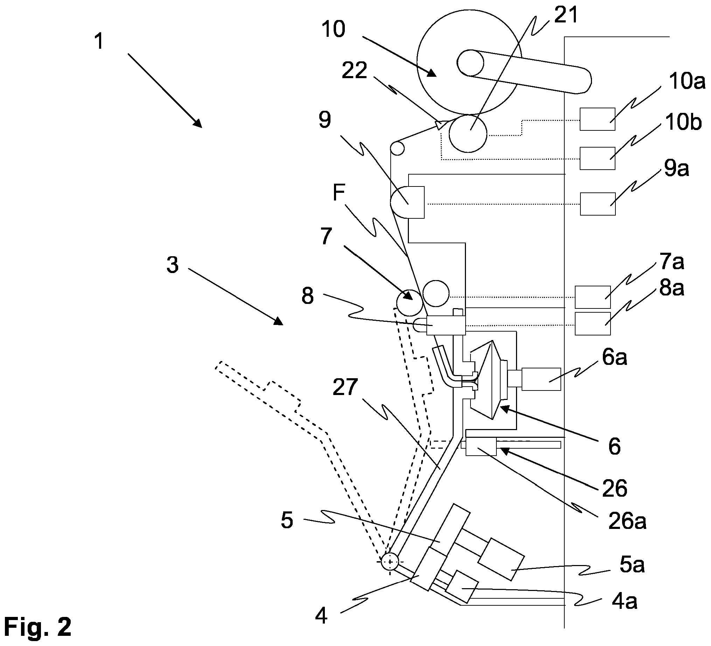

Figur 2 zeigt eine schematische und teilweise geschnittene Seitenansicht einer Arbeitsstelle 3 der Textilmaschine 1 der Figur 1. Dabei sind die einzelnen, bereits beschriebenen Funktionseinheiten der Arbeitsstelle 3 noch einmal detaillierter ersichtlich. Die Arbeitsstelle 3 weist dabei wie beschrieben die Zuführvorrichtung 4 auf, welche vorliegend über einen arbeitsstelleneigenen Zuführantrieb 4a verfügt. Ebenso ist die Auflöseeinrichtung 5 mit einem Einzelantrieb, nämlich dem Auflöseantrieb 5a versehen. Weiterhin ist nun die Spinnvorrichtung 6, welche vorliegend einen einzeln angetriebenen Spinnrotor beinhaltet, mit dem Antrieb 6a der Spinnvorrichtung 6 detailliert erkennbar. Durch die Drehung des Spinnrotors wird dabei in an sich bekannter Weise das von der Auflöseeinrichtung 5 zur Verfügung gestellte Fasermaterial FM in das Ende des bis in den Spinnrotor hineinreichenden Fadens F eingebunden. Der Faden F tritt an der Außenseite der Spinnvorrichtung 6, welche durch ein Deckelelement 27 verschlossen wird, aus der Spinnvorrichtung 6 aus und wird von der Abzugsvorrichtung 7 abgezogen. Die Abzugsvorrichtung 7 weist hierzu einen spinnstelleneigenen Einzelantrieb, nämlich den Abzugsantrieb 7a auf.

Während des Abzugs wird der Faden F wie bereits beschrieben über einen Garnreiniger 8 geführt, welcher den Faden bzw. das Garn auf Garnfehler wie Dick- und Dünnstellen überprüft. Ebenso kann der Garnreiniger 8 als Fadenwächter dienen, welcher das Vorhandensein des Fadens F an der Arbeitsstelle 3 detektiert und die Arbeitsstelle 3 im Falle eines Fadenbruchs sofort stillsetzt. Erkennt der Garnreiniger 8 hingegen einen Garnfehler, so wird die Arbeitsstelle 3 ebenfalls stillgesetzt und im Anschluss daran das fehlerhafte Fadenstück entfernt. Anschließend muss der Faden F wieder neu angesetzt werden, um die Fasern im Spinnrotor wieder mit dem Fadenende zu verbinden. Vorliegend ist der Garnreiniger 8 mit einem Einzelantrieb, dem Antrieb 8a des Garnreinigers 8, versehen, mittels welchem der Faden F in einer Richtung quer zu seiner Abzugsrichtung hin und her changierbar ist. Das Einlaufen der Abzugswalzen der Abzugsvorrichtung 7 kann hierdurch vermieden werden. Alternativ wäre es aber natürlich ebenfalls denkbar, außerhalb des Garnreinigers 8 einen separaten Changierantrieb für den Faden F im Bereich der Abzugsvorrichtung 7 vorzusehen.

Im weiteren Verlauf gelangt der abgezogene Faden F über eine Paraffiniereinrichtung 9, wo er über einen sich drehenden Paraffinklotz gezogen wird. Der Paraffinklotz ist mittels eines Einzelantriebs, nämlich des Paraffinierantriebs 9a antreibbar. Schließlich gelangt der Faden F zu der Spulvorrichtung 10, wo er in an sich bekannter Weise auf eine Spule aufgewickelt wird. Die Spulvorrichtung 10 beinhaltet dabei eine vorliegend mittels eines Einzelantriebs, hier des Spulantriebs 10a, angetriebene Spulwalze 28 sowie einen mittels eines Einzelantriebs, nämlich des Changierantriebs 10b, angetriebenen Fadenführer 29.

Die beschriebene Arbeitsstelle 3 ist dabei bevorzugt als sogenannte autarke Arbeitsstelle 3 ausgeführt, d.h. sie kann sämtliche den Spinnprozess betreffende Vorgänge wie das Anspinnen, das Abstellen und das Anfahren der einzelnen Arbeitsstelle selbstständig, d.h. ohne eine verfahrbare Wartungseinrichtung, durchführen. Die einzelnen Funktionseinheiten der Arbeitsstellen 3 verfügen hierzu jeweils über Einzelantriebe. Um das selbstständige Anspinnen bzw. Ansetzen oder gegebenenfalls auch Wartungsarbeiten an der Arbeitsstelle 3 zu ermöglichen, verfügt die vorliegend gezeigte Arbeitsstelle 3 zudem noch über eine Öffnereinheit 26, mittels welcher das Deckelelement 27, welches im Spinnbetrieb die Spinnvorrichtung 6 verschließt, geöffnet werden kann. Verschiedene Öffnungszustände des Deckelelements 27 sind vorliegend in gestrichelten Linien dargestellt.

Figur 3 zeigt nun ein Blockschaltbild einer Steuerungs- und Kommunikationsstruktur einer Textilmaschine 1, die vorliegend ebenfalls als Rotorspinnmaschine ausgeführt ist. Die Textilmaschine 1 weist eine Vielzahl von gleichartigen, nebeneinander angeordneten Sektionen 2 auf, von denen wiederum jede eine eigene Sektionssteuerung 13 aufweist. Jede der Sektionen 2 weist dabei eine Vielzahl nebeneinander angeordneter Arbeitsstellen 3 auf, wobei jedoch vorliegend aus Gründen der Übersichtlichkeit lediglich für eine Sektion 2 die Arbeitsstellen 3 dargestellt sind. Dabei ist aus Gründen der Übersichtlichkeit auch nur eine der Arbeitsstellen 3 beschriftet. Die Sektionssteuerungen 13 sind dabei in an sich bekannter Weise über einen Maschinenbus 14 mit einer Maschinensteuerung 12 verbunden. Über die Maschinensteuerung 12 erhalten die einzelnen Sektionen 2 bzw. deren Arbeitsstellen 3 Daten, beispielsweise Informationen über die zu produzierenden Produkte. Ebenso können die Sektionen 2 bzw. die Sektionssteuerungen 13 über den Maschinenbus 14 mit der Maschinensteuerung 12 kommunizieren und Daten bzw. Informationen über die einzelnen Sektionen 2 und/oder über einzelne Arbeitsstellen 3 an die Maschinensteuerung 12 senden.

Zur Kommunikation innerhalb der einzelnen Sektionen 2 sind nun in jeder Sektion 2 jeweils wenigstens zwei Sektionsbusse 15, 16 vorgesehen, wobei die Sektionssteuerung 13 an beide Sektionsbusse 15, 16 angeschlossen ist. Die Verbindungen sind dabei in üblicherweise als Schneidklemmen ausgeführt, welche vorliegend durch Doppelpfeile symbolisiert sind. Die Sektionsbusse 15, 16 und der Maschinenbus 14 können dabei als CAN-Bus oder auch als Ethernet-Bus ausgebildet sein.

Jede der Arbeitsstellen 3 weist nun eine Mehrzahl an kommunikationsfähigen Einheiten auf, welche sowohl Funktionseinheiten der Arbeitsstelle 3 als auch Steuereinheiten der Arbeitsstelle 3 umfassen können. Im vorliegenden Beispiel weisen die Arbeitsstellen 3 als Funktionseinheiten eine Zuführvorrichtung 4 (siehe Figur 2) mit einem Zuführantrieb 4a, eine Auflöseeinrichtung 5 (siehe Figur 2) mit einem Auflöseantrieb 5a, eine Spulvorrichtung 10 (siehe Figur 2) mit einem Spulantrieb 10a und einem Changierantrieb 10b, eine Abzugsvorrichtung 7 (siehe Figur 2) mit einem Abzugsantrieb 7a, eine Spinnvorrichtung 6 (siehe Figur 2) mit einem Antrieb 6a sowie einen Garnreiniger 8 auf, welcher einen nicht dargestellten Sensor beinhaltet und zusätzlich einen Antrieb 8a (siehe Figur 2) beinhalten kann. Weiterhin weist jede Arbeitsstelle 3 wenigstens eine Arbeitsstellensteuerung 18, 25 auf. Die vorliegend gezeigte Textilmaschine 1weist zwei verschiedene Arbeitsstellensteuerungen 18, 25 auf, wobei an jeder der Arbeitsstellen 3 die beiden Arbeitsstellensteuerungen 18, 25 vorgesehen sind. Natürlich können aber auch bei der in Figur 3 gezeigten Textilmaschine 1 noch weitere Funktionseinheiten vorgesehen sein, wie es beispielsweise in Figur 2 dargestellt ist.

Es ist nun vorgesehen, dass ein erster Teil der beschriebenen kommunikationsfähigen Einheiten mit dem ersten Sektionsbus 15 der beiden Sektionsbusse 15, 16 verbunden ist und ein zweiter Teil der kommunikationsfähigen Einheiten der Arbeitsstellen 3 mit dem zweiten Sektionsbus 16 verbunden ist. Durch das Vorsehen von zwei Sektionsbussen 15, 16 ist es nicht nur möglich, die einzelnen Busteilnehmer auf Sektionsebene besser in der Kommunikationsstruktur zu verteilen. Darüber hinaus ist es auch möglich, die beiden Sektionsbusse 15, 16 mit unterschiedlichen Kommunikationsgeschwindigkeiten zu betreiben und einen schnellen Datenaustausch zwischen an jeweils einen gemeinsamen Sektionsbus 15, 16 angeschlossenen, kommunikationsfähigen Einheiten zu ermöglichen. Andererseits ist es auch möglich, eine Kommunikation zwischen kommunikationsfähigen Einheiten zu verhindern, indem diese an unterschiedliche Sektionsbusse 15, 16 angeschlossen werden. Sofern dennoch ein Datenaustausch zwischen den beiden Sektionsbussen 15, 16 zeitweise oder ständig oder auch nur zwischen bestimmten Teilnehmern bzw. kommunikationsfähigen Einheiten erwünscht ist, kann dieser trotz der Anbindung an unterschiedliche Sektionsbusse 15, 16 unter Vermittlung durch die Sektionssteuerung 13 erfolgen. Die vorliegende Kommunikationsstruktur mit zwei Sektionsbussen 15, 16 bietet daher vielfältige Anordnungsmöglichkeiten für die kommunikationsfähigen Einheiten, wobei dennoch aufgrund der reduzierten Anzahl an Busteilnehmern auf jedem Sektionsbus 15, 16 jederzeit ein schnelles Ansprechen gewährleistet wird.

Vorliegend sind nun der Garnreiniger 8, gegebenenfalls auch mit seinem Antrieb 8a (siehe Figur 2) sowie der Antrieb 6a der Spinnvorrichtung 6 direkt als Busteilnehmer an den ersten Sektionsbus 15 angeschlossen. Die weiteren Funktionseinheiten der Arbeitsstellen 3 sind hingegen nicht direkt, sondern nur indirekt über vorliegend zwei Arbeitsstellensteuerungen 18, 25 an den zweiten Sektionsbus 16 angeschlossen. Im vorliegenden Beispiel sind dabei der Zuführantrieb 4a und der Auflöseantrieb 5a jeweils an die erste Arbeitsstellensteuerung 18 angeschlossen und der Spulantrieb 10a, der Changierantrieb 10b und der Abzugsantrieb 7a jeweils an die zweite Arbeitsstellensteuerung 25 angeschlossen. Es ist daher auch nicht unbedingt erforderlich, dass die indirekt an einen der Sektionsbusse 15, 16 angeschlossenen Funktionseinheiten der Arbeitsstellen 3 als kommunikationsfähige Funktionseinheiten ausgebildet sind, obwohl dies natürlich möglich ist. In jedem Falle wird durch den indirekten Anschluss mehrerer Funktionseinheiten der Arbeitsstellen 3 über die Arbeitsstellensteuerungen 18, 25 die Anzahl der Busteilnehmer auf dem zweiten Sektionsbus 16 in vorteilhafter Weise reduziert, was wiederum ein schnelles Ansprechen gewährleistet. Weiterhin sind in vorliegender Darstellung noch mehrere Anzeigevorrichtungen 20 für die Arbeitsstellen 3 erkennbar, wobei vorliegend jeweils zwei Arbeitsstellen 3 eine gemeinsame Anzeigevorrichtung 20 zugeordnet ist. Über diese kann ein Bediener jeweils Informationen über den Betriebszustand und/oder die an den jeweiligen Arbeitsstellen 3 produzierten Produkte abrufen.

Natürlich wäre es abweichend von der gezeigten Darstellung auch möglich, lediglich eine Arbeitsstellensteuerung 18, 25 vorzusehen. Weiterhin können, wie bereits beschrieben, auch mehr oder weniger oder andere kommunikationsfähige Einheiten bzw. Funktionseinheiten an den Arbeitsstellen 3 vorgesehen sein. Dabei wäre es natürlich, insbesondere wenn die Arbeitsstellen 3 nur wenige Funktionseinheiten aufweisen, auch denkbar, alle Funktionseinheiten der Arbeitsstellen 3 als kommunikationsfähige Funktionseinheiten auszubilden und direkt an einen der beiden Sektionsbusse 15, 16 anzuschließen, wobei die Funktionseinheiten dann in an sich bekannte Weise über die Sektionssteuerung 13 angesteuert werden. Insbesondere wenn die Arbeitsstellen 3 eine Vielzahl von Funktionseinheiten aufweisen, ist die indirekte Anbindung der Funktionseinheiten über eine oder mehrere Arbeitsstellensteuerungen 18, 25 jedoch vorteilhaft.

Sind wie vorliegend gezeigt jeweils zwei Arbeitsstellensteuerungen 18, 25 vorgesehen, so können die einzelnen Funktionseinheiten nach unterschiedlichen Kriterien an diese beiden Arbeitsstellensteuerungen 18, 25 angeschlossen werden. Beispielsweise ist es denkbar, dass die erste Arbeitsstellensteuerung 18 der Energieversorgung dient und ein Leistungsteil (nicht dargestellt) aufweist, während die zweite Arbeitsstellensteuerung 25 als Spinnvorrichtungssteuerung ausgebildet ist und eine Ablaufsteuerung beinhaltet. Um auch die Energieversorgung der an die zweite Arbeitsstellensteuerung 25 angeschlossenen Funktionseinheiten zu gewährleisten, kann die zweite Arbeitsstellensteuerung 25 über hier nicht dargestellte Versorgungsleitungen direkt mit der ersten Arbeitsstellensteuerung 18 verbunden sein.

Der Energieversorgung der ersten Arbeitsstellensteuerungen 18 dient wiederum eine Energieversorgungseinheit 17. Vorliegend ist in jeder der Sektionen 2 jeweils eine Energieversorgungseinheit 17 vorgesehen, welche über hier ebenfalls nicht dargestellte Versorgungsleitungen mit jeder der ersten Arbeitsstellensteuerungen 18 verbunden ist. In vorliegendem Ausführungsbeispiel ist die Energieversorgungseinheit 17 jeweils als Busteilnehmer direkt an den ersten Sektionsbus 15 angeschlossen. Die Energieversorgungseinheit 17 kann dadurch direkt über die Sektionssteuerung 13 und/oder über die Maschinensteuerung 12 angesprochen werden und lastfrei geschaltet bzw. wieder eingeschalten werden. Der Energieverbrauch kann hierdurch bei Stillstand der Sektion 2 oder der Textilmaschine 1 reduziert werden. Zudem wird dadurch auch Sicherheitsaspekten Rechnung getragen. Die Energieversorgungseinheit 17 könnte natürlich anstelle wie hier an den ersten Sektionsbus 15 stattdessen auch an den zweiten Sektionsbus 16 angeschlossen sein.

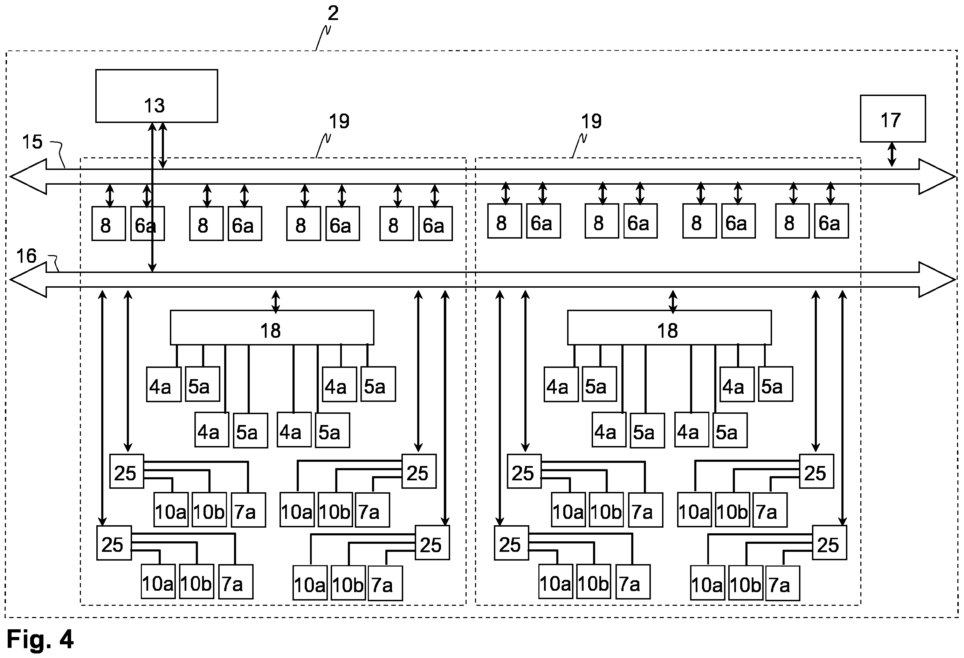

Figur 4 zeigt eine alternative Ausführung einer Kommunikations- und Steuerstruktur für eine Textilmaschine 1. Um unnötige Wiederholungen zu vermeiden, wird im Folgenden nur noch auf die Unterschiede zum Ausführungsbeispiel der Figur 3 eingegangen. Dabei werden für Merkmale, die im Vergleich zum in Figur 3 dargestellten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale. Weiterhin ist aus Gründen der besseren Übersichtlichkeit in der Figur 4 lediglich eine einzige Sektion 2 gezeigt, bei welcher lediglich die Kommunikationsstruktur auf Sektionsebene und auf Arbeitsstellenebene abgebildet ist.

Im Unterschied zur Ausführung der Figur 3 sind dabei die ersten Arbeitsstellensteuerungen 18 nicht an jeder der Arbeitsstellen 3, die hier nicht gekennzeichnet sind, vorgesehen, sondern die ersten Arbeitsstellensteuerungen 18 sind als Gruppensteuerungen ausgebildet. Dabei werden innerhalb der Sektionen 2 jeweils mehrere Arbeitsstellen 3 nochmals zu Gruppen 19 zusammengefasst und jeweils einer gemeinsamen ersten Arbeitsstellensteuerung 18 zugeordnet. Vorliegend umfasst eine Gruppe 19 jeweils vier Arbeitsstellen 3. Denkbar sind natürlich auch mehr oder weniger Arbeitsstellen 3 je Gruppe 19. Die ersten Arbeitsstellensteuerungen 18 sind dabei wiederum zur Energieversorgung der einzelnen Arbeitsstellen 3 vorgesehen, wobei vorteilhafterweise lediglich ein Leistungsteil (nicht dargestellt) für die gesamte Gruppe 19 aus mehreren Arbeitsstellen 3 erforderlich ist. Die zweiten Arbeitsstellensteuerungen 25 sind hingegen wie auch im Beispiel der Figur 3 als Einzelsteuerungen je Arbeitsstelle 3 vorgesehen, um die Abläufe an den einzelnen Arbeitsstellen 3 jeweils unabhängig von den anderen Arbeitsstellen 3 gestalten zu können. Eine derartige Kommunikations- und Steuerstruktur kann besonders platzsparend ausgeführt werden und erfordert einen wesentlich verringerten Verkabelungsaufwand mit kürzeren Leitungslängen, was wiederum der Übertragungsgeschwindigkeit zu Gute kommt.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Textilmaschine
- 2: Sektion
- 3: Arbeitsstelle
- 4: Zuführvorrichtung
4a Zuführantrieb
- 5: Auflöseeinrichtung
5a Auflöseantrieb
- 6: Spinnvorrichtung
6a Antrieb der Spinnvorrichtung
- 7: Abzugsvorrichtung
7a Abzugsantrieb
- 8: Garnreiniger
8a Antrieb des Garnreinigers
- 9: Paraffiniereinrichtung
9a Paraffinierantrieb
- 10: Spulvorrichtung
10a Spulantrieb
10b Changierantrieb
- 11: Endgestell
- 12: Maschinensteuerung
- 13: Sektionssteuerung
- 14: Maschinenbus
- 15: erster Sektionsbus
- 16: zweiter Sektionsbus
- 17: Energieversorgungseinheit
- 18: erste Arbeitsstellensteuerung
- 19: Gruppe
- 20: Anzeigevorrichtung
- 21: Spulwalze
- 22: Fadenführer
- 23 24: Anlagensteuerung
- 25: zweite Arbeitsstellensteuerung
- 26: Öffnereinheit
26a Öffnerantrieb
- 27: Deckelelement
- 28: Spulwalze
- 29: Fadenführer

- FM: Fasermaterial
- F: Faden

## Patentansprüche

1. Textilmaschine (1), insbesondere Spinn- oder Spulmaschine, mit einer Vielzahl von nebeneinander angeordneten, zu mehreren Sektionen (2) zusammengefassten Arbeitsstellen (3), welche jeweils mehrere kommunikationsfähige Einheiten aufweisen, wobei die Sektionen (2) jeweils eine Sektionssteuerung (13) aufweisen, und wobei zur Kommunikation mit der Sektionssteuerung (13) die kommunikationsfähigen Einheiten der Arbeitsstellen (3) einer Sektion (2) mit einem Sektionsbus (15, 16) verbunden sind, wobei die Sektionen (2) jeweils wenigstens zwei mit der Sektionssteuerung (13) verbundene Sektionsbusse (15, 16) aufweisen, wobei ein erster Teil der kommunikationsfähigen Einheiten der Arbeitsstellen (3) mit einem ersten (15) der wenigstens zwei Sektionsbusse (15, 16) verbunden ist und ein zweiter Teil der kommunikationsfähigen Einheiten der Arbeitsstellen (3) mit einem zweiten (16) der wenigstens zwei Sektionsbusse (15, 16) verbunden ist, **dadurch gekennzeichnet, dass** der erste Teil der kommunikationsfähigen Einheiten mehrere gleichartige Einzelantriebe der Arbeitsstellen (3), insbesondere Rotoreinzelantriebe oder Luftspinndüsen, umfasst, welche direkt als Busteilnehmer an den ersten Sektionsbus (15) angeschlossen sind, und dass der zweite Teil der kommunikationsfähigen Einheiten Arbeitsstellensteuerungen (18, 25) umfasst, wobei jeweils mehrere Funktionseinheiten der Arbeitsstellen (3) mit den Arbeitsstellensteuerungen (18, 25) verbunden sind.

2. Textilmaschine (1) nach dem vorhergehenden Anspruch, **dadurch gekennzeichnet, dass** der erste Teil der kommunikationsfähigen Einheiten mehrere Sensoren, insbesondere Garnreiniger (8), umfasst.

3. Textilmaschine (1) nach einem der vorhergehenden Ansprüche, **dadurch gekennzeichnet, dass** wenigstens zwei verschiedenartige Arbeitsstellensteuerungen (18, 25) vorgesehen sind, wobei vorzugsweise die verschiedenartigen Arbeitsstellensteuerungen (18, 25) erste Arbeitsstellensteuerungen (18) beinhalten, welche jeweils ein Leistungsteil für die Energieversorgung der Funktionseinheiten der Arbeitsstellen (3) aufweisen, und zweite Arbeitsstellensteuerungen (25) beinhalten, welche jeweils einen Speicher für eine Ablaufsteuerung aufweisen.

4. Textilmaschine (1) nach einem der vorhergehenden Ansprüche, **dadurch gekennzeichnet, dass** die ersten Arbeitsstellensteuerungen (18) als Gruppensteuerungen für eine Gruppe von mehreren, insbesondere vier, Arbeitsstellen (3) ausgebildet sind.

5. Textilmaschine (1) nach einem der vorhergehenden Ansprüche, **dadurch gekennzeichnet, dass** zumindest ein Teil der Funktionseinheiten der Arbeitsstellen (3) jeweils mindestens einen Einzelantrieb aufweist.

6. Textilmaschine (1) nach einem der vorhergehenden Ansprüche, **dadurch gekennzeichnet, dass** jede der Arbeitsstellen (3) als Funktionseinheiten zumindest jeweils eine Zuführvorrichtung (4) mit einem Zuführantrieb (4a), eine Abzugsvorrichtung (7) mit einem Abzugsantrieb (7a) und eine Spulvorrichtung (10) mit einem Spulantrieb (10a) und einem Changierantrieb (10b) aufweist, wobei vorzugsweise zumindest der Zuführantrieb (4a) jeder Arbeitsstelle (3) an jeweils eine der ersten Arbeitsstellensteuerungen (18) angeschlossen ist und wobei vorzugsweise zumindest der Abzugsantrieb (7a), der Spulantrieb (10a) und der Changierantrieb (10b) jeder Arbeitsstelle (3) an jeweils eine der zweiten Arbeitsstellensteuerungen (25) angeschlossen sind.

7. Textilmaschine (1) nach einem der vorhergehenden Ansprüche, **dadurch gekennzeichnet, dass** den Arbeitsstellen, insbesondere den zweiten Arbeitsstellensteuerungen (25), eine Anzeigevorrichtung (20) zugeordnet ist, wobei vorzugsweise jeweils zwei zweiten Arbeitsstellensteuerungen (25) eine gemeinsame Anzeigevorrichtung (20) zugeordnet ist.

8. Textilmaschine (1) nach einem der vorhergehenden Ansprüche, **dadurch gekennzeichnet, dass** je Sektion (2) jeweils wenigstens eine Energieversorgungseinheit (17) vorgesehen ist, welche als Busteilnehmer an den ersten und/oder an den zweiten Sektionsbus (15, 16) angeschlossen ist.

9. Textilmaschine (1) nach einem der vorhergehenden Ansprüche, **dadurch gekennzeichnet, dass** die Textilmaschine (1) eine Maschinensteuerung (12) und einen Maschinenbus (14) aufweist und dass die Sektionssteuerungen (13) zur Kommunikation mit der Maschinensteuerung (12) an den Maschinenbus (14) angeschlossen sind.

10. Verfahren zum Steuern einer Textilmaschine (1), insbesondere Spinn- oder Spulmaschine, mit einer Vielzahl von nebeneinander angeordneten, zu mehreren Sektionen (2) zusammengefassten Arbeitsstellen (3), welche mehrere kommunikationsfähige Einheiten aufweisen,
wobei die Sektionen (2) jeweils eine Sektionssteuerung (13) aufweisen, und wobei zur Kommunikation mit der Sektionssteuerung (13) die kommunikationsfähigen Einheiten der Arbeitsstellen (3) einer Sektion (2) mit einem Sektionsbus (15, 16) verbunden sind wobei die Sektionen (2) jeweils wenigstens zwei mit der Sektionssteuerung (13) verbundene Sektionsbusse (15, 16) aufweisen, wobei ein erster Teil der kommunikationsfähigen Einheiten der Arbeitsstellen (3) mit einem ersten (15) der wenigstens zwei Sektionsbusse (15, 16) verbunden ist und ein zweiter Teil der kommunikationsfähigen Einheiten der Arbeitsstellen (3) mit einem zweiten (16) der wenigstens zwei Sektionsbusse (15, 16) verbunden ist, **dadurch gekennzeichnet, dass** der erste Teil der kommunikationsfähigen Einheiten mehrere gleichartige Einzelantriebe der Arbeitsstellen (3), insbesondere Rotoreinzelantriebe oder Luftspinndüsen, umfasst, welche direkt als Busteilnehmer an den ersten Sektionsbus (15) angeschlossen sind, und mit der Sektionssteuerung (13) und/oder weiteren kommunikationsfähigen Einheiten der Arbeitsstellen (3) kommuniziert und dass der zweite Teil der kommunikationsfähigen Einheiten Arbeitsstellensteuerungen (18, 25) umfasst, wobei jeweils mehrere Funktionseinheiten der Arbeitsstellen (3) mit den Arbeitsstellensteuerungen (18, 25) verbunden sind, und mit der Sektionssteuerung (13) und/oder weiteren kommunikationsfähigen Einheiten der Arbeitsstellen (3) kommuniziert.

11. Verfahren nach dem vorhergehenden Anspruch, **dadurch gekennzeichnet, dass** die wenigstens zwei Sektionsbusse (15, 16) mit unterschiedlichen Übertragungsprotokollen und/oder unterschiedlichen Kommunikationsgeschwindigkeiten betrieben werden.

12. Verfahren nach einem der beiden vorhergehenden Ansprüche, **dadurch gekennzeichnet, dass** die kommunikationsfähigen Einheiten der Arbeitsstellen (3) wenigstens zwei verschiedenartige Arbeitsstellensteuerungen (18, 25) umfassen, wobei erste Arbeitsstellensteuerungen (18) Funktionseinheiten der Arbeitsstellen (3) mit Energie versorgen und wobei zweite Arbeitsstellensteuerungen (25) zeitliche Abläufe an den Arbeitsstellen (3) steuern.

13. Verfahren nach einem der Ansprüche 10 - 12, **dadurch gekennzeichnet, dass** die ersten und die zweiten Arbeitsstellensteuerungen (18, 25) über einen der wenigstens zwei Sektionsbusse (15, 16) direkt miteinander kommunizieren.

14. Verfahren nach einem der Ansprüche 10 - 13, **dadurch gekennzeichnet, dass** die Sektionssteuerung (13) als Bridge zwischen dem ersten Teil der kommunikationsfähigen Einheiten der Arbeitsstellen (3) und dem zweiten Teil der kommunikationsfähigen Einheiten der Arbeitsstellen (3) fungiert.

## Claims

1. A textile machine (1), in particular a spinning machine or winder, comprising a plurality of adjacently arranged workstations (3), which are combined to form multiple sections (2) and each include multiple communication-capable units, wherein the sections (2) each comprise a section control system (13), and wherein the communication-capable units of the workstations (3) of a section (2) are connected to a section bus (15, 16) for communication with the section control system (13), wherein the sections (2) each comprise at least two section busses (15, 16) connected to the section control system (13), wherein a first portion of the communication-capable units of the workstations (3) is connected to a first one (15) of the at least two section busses (15, 16) and a second portion of the communication-capable units of the workstations (3) is connected to a second one (16) of the at least two section busses (15, 16) **characterized in that** the first portion of the communication-capable units comprises multiple identical individual drives of the workstations (3), in particular individual rotor drives or air spinning nozzles, which are connected directly as bus users to the first section bus (15), and that the second portion of the communication-capable units comprises workstation control systems (18, 25), wherein in each case multiple functional units of the workstations (3) are connected to the workstation control systems (18, 25).

2. The textile machine (1) as claimed in the preceding claim, **characterized in that** the first portion of the communication-capable units comprises multiple sensors, in particular yarn clearers (8).

3. The textile machine (1) as claimed in one of the preceding claims, **characterized in that** at least two dissimilar workstation control systems (18, 25) are provided, wherein the dissimilar workstation control systems (18, 25) preferably contain first workstation control systems (18), which each comprise a power unit for supplying power to the functional units of the workstations (3), and contain second workstation control systems (25), which each comprise a memory for a sequence control system.

4. The textile machine (1) as claimed in one of the preceding claims, **characterized in that** the first workstation control systems (18) are designed as group control systems for a group of multiple, in particular four, workstations (3).

5. The textile machine (1) as claimed in one of the preceding claims, **characterized in that** at least a portion of the functional units of the workstations (3) comprises at least one individual drive in each case.

6. The textile machine (1) as claimed in one of the preceding claims, **characterized in that** each of the workstations (3) comprises, as functional units, in each case, at least a feeding device (4) encompassing a feeding drive (4a), a draw-off device (7) encompassing a draw-off drive (7a), and a winding device (10) encompassing a winding drive (10a), and a traversing drive (10b), wherein preferably at least the feeding drive (4a) of each workstation (3) is connected to one of the first workstation control systems (18) and wherein preferably at least the draw-off drive (7a), the winding drive (10a), and the traversing drive (10b) of each workstation (3) are connected to one of the second workstation control systems (25).

7. The textile machine (1) as claimed in one of the preceding claims, **characterized in that** a display device (20) is associated with the workstations, in particular the second workstation control systems (25), wherein preferably a common display device (20) is associated with two second workstation control systems (25) in each case.

8. The textile machine (1) as claimed in one of the preceding claims, **characterized in that** at least one power supply unit (17) is provided for each section (2) and is connected as a bus user to the first section bus (15) and/or to the second section bus (16).

9. The textile machine (1) as claimed in one of the preceding claims, **characterized in that** the textile machine (1) comprises a machine control system (12) and a machine bus (14), and the section control systems (13) are connected to the machine bus (14) for communication with the machine control system (12).

10. A method for controlling a textile machine (1), in particular a spinning machine or winder, comprising a plurality of adjacently arranged workstations (3), which are combined to form multiple sections (2) and each include multiple communication-capable units,
wherein the sections (2) each comprise a section control system (13), and wherein the communication-capable units of the workstations (3) of a section (2) are connected to a section bus (15, 16) for communication with the section control system (13), wherein the sections (2) each comprise at least two section busses (15, 16) connected to the section control system (13), wherein a first portion of the communication-capable units of the workstations (3) is connected to a first one (15) of the at least two section busses (15, 16) and a second portion of the communication-capable units of the workstations (3) is connected to a second one (16) of the at least two section busses (15, 16) **characterized in that**
the first portion of the communication-capable units comprises multiple identical individual drives of the workstations (3), in particular individual rotor drives or air spinning nozzles, which are connected directly as bus users to the first section bus (15), and communicate with the section control system (13) and/or further communication-capable units of the workstations (3), and that the second portion of the communication-capable units comprises workstation control systems (18, 25), wherein each multiple functional units of the workstations (3) are connected to the workstation control systems (18, 25), and communicate with the section control system (13) and/or further communication-capable units of the workstations (3).

11. The method as claimed in the preceding claim, **characterized in that** the at least two section busses (15, 16) are operated using different transmission protocols and/or different communication speeds.

12. The method as claimed in one of the two preceding claims, **characterized in that** the communication-capable units of the workstations (3) comprise at least two dissimilar workstation control systems (18, 25), wherein first workstation control systems (18) supply functional units of the workstations (3) with energy, and wherein second workstation control systems (25) control time sequences at the workstations (3).

13. The method as claimed in one of claims 10 through 12, **characterized in that** the first workstation control system (18) and the second workstation control system (25) communicate directly with one another via one of the at least two section busses (15, 16).

14. The method as claimed in one of claims 10 through 13, **characterized in that** the section control system (13) functions as a bridge between the first portion of the communication-capable units of the workstations (3) and the second portion of the communication-capable units of the workstations (3).

## Revendications

1. Machine textile (1), en particulier machine de filature ou de bobinage, avec une pluralité de postes de travail (3) disposés les uns à côté des autres et réunis en plusieurs sections (2), qui présentent chacun plusieurs unités communicantes, dans laquelle les sections (2) présentent chacune une commande de section (13), et dans laquelle, pour la communication avec la commande de section (13), les unités communicantes des postes de travail (3) d'une section (2) sont reliées à un bus de section (15, 16), dans laquelle les sections (2) présentent chacune au moins deux bus de section (15, 16) reliés à la commande de section (13), dans laquelle une première partie des unités communicantes des postes de travail (3) est reliée à un premier (15) des, au moins deux, bus de section (15, 16) et une deuxième partie des unités communicantes des postes de travail (3) est reliée à un deuxième (16) des, au moins deux, bus de section (15, 16), **caractérisé en ce que** la première partie des unités communicantes comprend plusieurs entraînements individuels de même type des postes de travail (3), en particulier des entraînements individuels de rotor ou des filières de filage à air, qui sont raccordés directement au premier bus de section (15) en tant que participants au bus, et **en ce que** la deuxième partie des unités communicantes comprend des commandes de postes de travail (18, 25), dans laquelle plusieurs unités fonctionnelles des postes de travail (3) sont respectivement reliées aux commandes de postes de travail (18, 25).

2. Machine textile (1) selon la revendication précédente, **caractérisée en ce que** la première partie des unités communicantes comprend plusieurs capteurs, en particulier des épurateurs de fil (8).

3. Machine textile (1) selon l'une quelconque des revendications précédentes, caractérisée en ce qu'il est prévu au moins deux commandes de postes de travail (18, 25) de types différents, dans laquelle, de préférence, les commandes de postes de travail (18, 25) de types différents comprenant des premières commandes de postes de travail (18) qui présentent chacune une unité de puissance pour l'alimentation en énergie des unités fonctionnelles des postes de travail (3), et des deuxièmes commandes de postes de travail (25) qui présentent chacune une mémoire pour une commande séquentielle.

4. Machine textile (1) selon l'une quelconque des revendications précédentes, **caractérisée en ce que** les premières commandes de poste de travail (18) se présentent sous la forme de commandes de groupe pour un groupe de plusieurs, en particulier quatre, postes de travail (3).

5. Machine textile (1) selon l'une quelconque des revendications précédentes, caractérisée en ce qu'au moins une partie des unités fonctionnelles des postes de travail (3) présente chacune au moins un entraînement individuel.

6. Machine textile (1) selon l'une quelconque des revendications précédentes, **caractérisée en ce que** chacun des postes de travail (3) présente comme unités fonctionnelles au moins respectivement un dispositif d'alimentation (4) avec un entraînement d'alimentation (4a), un dispositif de tirage (7) avec un entraînement de tirage (7a) et un dispositif de bobinage (10) avec un entraînement de bobinage (10a) et un entraînement de va-et-vient (10b), dans laquelle, de préférence, au moins l'entraînement d'alimentation (4a) de chaque poste de travail (3) est respectivement raccordé à l'une des premières commandes de poste de travail (18) et dans laquelle, de préférence, au moins l'entraînement de tirage (7a), l'entraînement de bobinage (10a) et l'entraînement de va-et-vient (10b) de chaque poste de travail (3) sont raccordés, respectivement, à l'une des deuxièmes commandes de poste de travail (25).

7. Machine textile (1) selon l'une quelconque des revendications précédentes, caractérisée en ce qu'un dispositif d'affichage (20) est associé aux postes de travail, en particulier aux deuxièmes commandes de postes de travail (25), dans laquelle, de préférence, un dispositif d'affichage (20) commun est associé respectivement à deux deuxièmes commandes de postes de travail (25).

8. Machine textile (1) selon l'une quelconque des revendications précédentes, caractérisée en ce qu'il est prévu pour chaque section (2) au moins une unité d'alimentation en énergie (17) qui est raccordée en tant que participant au bus au premier et/ou au deuxième bus de section (15, 16).

9. Machine textile (1) selon l'une quelconque des revendications précédentes, **caractérisée en ce que** la machine textile (1) comprend une commande de machine (12) et un bus de machine (14) et **en ce que** les commandes de section (13) sont raccordées au bus de machine (14) pour la communication avec la commande de machine (12).

10. Procédé pour commander une machine textile (1), en particulier une machine de filature ou de bobinage, avec une pluralité de postes de travail (3) disposés les uns à côté des autres et réunis en plusieurs sections (2), qui présentent plusieurs unités communicantes,
dans lequel les sections (2) présentent chacune une commande de section (13), et dans lequel, pour la communication avec la commande de section (13), les unités communicantes des postes de travail (3) d'une section (2) sont reliées à un bus de section (15, 16), dans laquelle les sections (2) présentent chacune au moins deux bus de section (15, 16) reliés à la commande de section (13), dans laquelle une première partie des unités communicantes des postes de travail (3) est reliée à un premier (15) des, au moins deux, bus de section (15, 16) et une deuxième partie des unités communicantes des postes de travail (3) est reliée à un deuxième (16) des, au moins deux, bus de section (15, 16), **caractérisé en ce que** la première partie des unités communicantes comprend plusieurs entraînements individuels de même type des postes de travail (3), en particulier des entraînements individuels de rotor ou des filières de filage à air, qui sont raccordés directement au premier bus de section (15) en tant que participants au bus, et communique avec la commande de section (13) et/ou d'autres unités communicantes des postes de travail (3), et **en ce que** la deuxième partie des unités communicantes comprend des commandes de postes de travail (18, 25), dans lequel plusieurs unités fonctionnelles des postes de travail (3) sont respectivement reliées aux commandes de postes de travail (18, 25), et communique avec la commande de section (13) et/ou d'autres unités communicantes des postes de travail (3).

11. Procédé selon la revendication précédente, **caractérisé en ce que** les, au moins deux, bus de section (15, 16) fonctionnent avec des protocoles de transfert différents et/ou des vitesses de communication différentes.

12. Procédé selon l'une quelconque des deux revendications précédentes, **caractérisé en ce que** les unités communicantes des postes de travail (3) comprennent au moins deux commandes de poste de travail (18, 25) de types différents, dans lequel des premières commandes de postes de travail (18) alimentant en énergie des unités fonctionnelles des postes de travail (3) et dans lequel des deuxièmes commandes de postes de travail (25) commandent des séquences temporelles aux postes de travail (3).

13. Procédé selon l'une quelconque des revendications 10 à 12, **caractérisé en ce que** les premières et les deuxièmes commandes de postes de travail (18, 25) communiquent directement entre elles par l'intermédiaire de l'un des, au moins deux, bus de section (15, 16).

14. Procédé selon l'une quelconque des revendications 10 à 13, **caractérisé en ce que** la commande de section (13) fait office de pont entre la première partie des unités communicantes des postes de travail (3) et la deuxième partie des unités communicantes des postes de travail (3).
